(19) Europäisches Patentamt
European Patent Office
Office européen des brevets

(11) **EP 4 598 151 A1**

(12) **EUROPEAN PATENT APPLICATION**
published in accordance with Art. 153(4) EPC

(43) Date of publication:
06.08.2025 Bulletin 2025/32

(21) Application number: 22960986.2

(22) Date of filing: 30.09.2022

(51) International Patent Classification (IPC):
*H04W 52/16* (2009.01)    *H04W 52/34* (2009.01)

(52) Cooperative Patent Classification (CPC):
H04W 52/16; H04W 52/34

(86) International application number:
PCT/JP2022/036686

(87) International publication number:
WO 2024/069927 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Tokyo 100-6150 (JP)

(72) Inventors:
• MATSUMURA, Yuki
Tokyo 100-6150 (JP)

• NAGATA, Satoshi
Tokyo 100-6150 (JP)
• SUN, Weiqi
Beijing 100190 (CN)
• WANG, Jing
Beijing 100190 (CN)
• CHEN, Lan
Beijing 100190 (CN)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57)    A terminal according to an aspect of the present disclosure includes a control section that determines a first parameter related to power of a phase tracking reference signal (PTRS) and corresponding to at least one of two panels and that determines, based on the first parameter, a transmission power ratio between the PTRS and a physical uplink shared channel (PUSCH), and a transmitting section that transmits the PTRS and the PUSCH. According to an aspect of the present disclosure, even when simultaneous transmission using multi-panel is supported, transmission control can be appropriately performed.

FIG. 4A

FIG. 4B

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, Rel-18 (or later versions) NR), a terminal (user terminal, User Equipment (UE)) can use one of multi-panel (or multi-beam) for uplink (UL) transmission. It is studied that for improvement of UL throughput/reliability, simultaneous UL transmission (for example, simultaneous multi-panel UL transmission (SiMPUL or STxMP)) using a plurality of panels is supported for one or more transmission/reception points (TRPs).

In a case where the simultaneous multi-panel UL transmission is supported, the UE transmits ULs simultaneously from two panels, but sufficient progress has not been made on a study of how to control the UL transmission for one or more panels/TRPs.

In view of this, the present disclosure has one object to provide a terminal, a radio communication method, and a base station that can appropriately perform UL transmission control even when simultaneous transmission using multi-panel is supported.

Solution to Problem

A terminal according to an aspect of the present disclosure includes a control section that determines a first parameter related to power of a phase tracking reference signal (PTRS) and corresponding to at least one of two panels and that determines, based on the first parameter, a transmission power ratio between the PTRS and a physical uplink shared channel (PUSCH), and a transmitting section that transmits the PTRS and the PUSCH. Advantageous Effects of Invention

According to an aspect of the present disclosure, even when simultaneous transmission using multi-panel is supported, transmission control can be appropriately performed.

Brief Description of Drawings

[FIG. 1] FIGS. 1A and 1B are diagrams to show examples of single-panel UL transmission.
[FIG. 2] FIGS. 2A to 2C are diagrams to show examples of schemes 1 to 3 for simultaneous UL transmission using multi-panel.

[FIG. 3] FIG. 3 shows an example of a PUSCH to PTRS power ratio per layer per RE.

[FIG. 4] FIGS. 4A and 4B are diagrams to show examples of correspondence between a parameter, a panel, and a PTRS port according to a first embodiment.

[FIG. 5] FIGS. 5A, 5B, and 5C are diagrams to show examples of correspondence between a parameter, a panel, and a PTRS port according to a second embodiment.

[FIG. 6] FIG. 6 is a diagram to show an example of the ratio of a PUSCH EPRE to a DMRS EPRE.

[FIG. 7] FIGS. 7A, 7B, and 7C are diagrams to show examples of correspondence between a parameter, a panel, and a DMRS port according to a third embodiment.

[FIG. 8] FIG. 8 is a diagram to show an example of a schematic structure of a radio communication system according to one embodiment.

[FIG. 9] FIG. 9 is a diagram to show an example of a structure of a base station according to one embodiment.

[FIG. 10] FIG. 10 is a diagram to show an example of a structure of a user terminal according to one embodiment.

[FIG. 11] FIG. 11 is a diagram to show an example of a hardware structure of the base station and the user terminal according to one embodiment.

[FIG. 12] FIG. 12 is a diagram to show an example of a vehicle according to one embodiment.

Description of Embodiments

In future radio communication systems (for example, Rel-18 (or later versions) NR), it is assumed that simultaneous UL transmission (for example, simultaneous multi-panel UL transmission (SiMPUL)) using a plurality of beams/panels/TRPs is supported for one or more transmission/reception points (TRPs).

For example, for Rel. 18, simultaneous UL transmission using up to two TRPs/two panel has been under study. Considering single-DCI based and multi-DCI based multi-TRP operations, it is also assumed that a total number of layers and a total number of codewords are set to up to 4 layers and up to 2 over all the panels, respectively. Of course, the number of TRPs, the number of panels, the number of layers, and the number of codewords are not limited to these.

(Single-panel Transmission)

At least one of Transmission Schemes A and B below (single-panel UL transmission schemes A and B) may be applied to a single-panel UL transmission scheme or candidates for the single-panel UL transmission scheme. Note that, in the present disclosure, a panel/UE panel may be interpreted as a UE capability value set reported for each UE capability. In the present disclosure, different panels, different spatial relations, different joint TCI states, different TPC parameters, different antenna ports, and the like may be interchangeably interpreted.

{Transmission Scheme A: Single-panel Single-TRP UL Transmission}

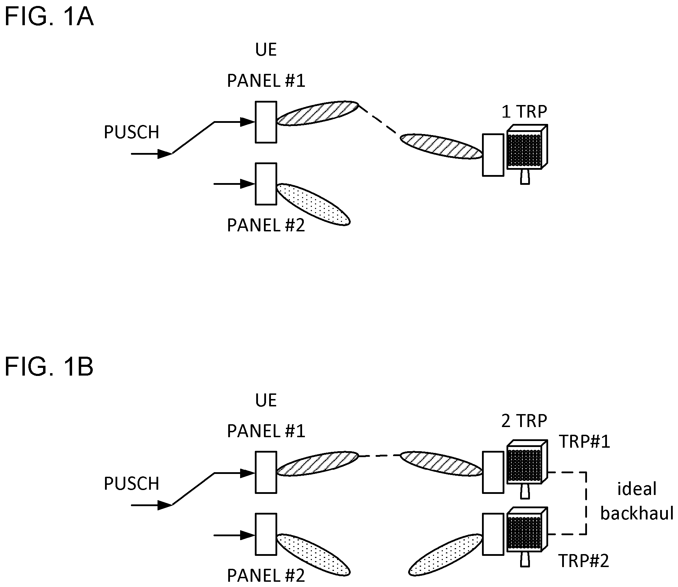

In Rel. 15 and Rel. 16, the UE uses a transmission scheme in which UL is transmitted to one TRP from only one beam and panel at one timing (FIG. 1A).

{Transmission Scheme B: Single-panel Multi-TRP UL Transmission}

In Rel. 17, it is studied that UL transmission from only one beam and panel is performed at one timing and repetition transmission to a plurality of TRPs is performed (FIG. 1B). In an example in FIG. 1B, the UE transmits a PUSCH to TRP #2 from panel #2 after transmitting a PUSCH to TRP #1 from panel #1 (switching the beam and panel). The two TRPs are connected to each other via an ideal backhaul.

(Multi-panel Transmission)

For Rel. 18 (or later versions), it is studied that for improvement of UL throughput/reliability, simultaneous UL transmission (for example, simultaneous multi-panel UL transmission (SiMPUL)) using a plurality of panels is supported for one or more TRPs. A multi-panel UL transmission scheme for a given UL channel (for example, PUSCH/PUCCH) and the like is also under study.

As multi-panel UL transmission, up to X panels (for example, X = 2) and up to Y panels (for example, Y = 2) may be supported, for example. When UL precoding indication for a PUSCH is supported in the multi-panel UL transmission, a codebook for existing systems (for example, Rel. 16 (or earlier versions)) may be supported for multi-panel simultaneous transmission. When single-DCI and multi-DCI based multi-TRP operations are considered, the number of layers and the number of codewords (CWs) may be up to x (for example, x = 4) and up to y (for example, y = 2) in all the panels, respectively.

For a multi-panel UL transmission scheme or candidates for the multi-panel UL transmission scheme, at least one of schemes 1 to 3 below (multi-panel UL transmission schemes 1 to 3) is under study. Only one of Transmission Schemes 1 to 3 may be supported. A plurality of schemes including at least one of Transmission Schemes 1 to 3 may be supported, and one of the plurality of transmission schemes may be configured for the UE.

<Transmission Scheme 1: Coherent Multi-panel UL Transmission>

A plurality of panels may be synchronized with each other. All the layers are mapped to all the panels. A plurality of analog beams are indicated. An SRS resource indicator (SRI) field may be enhanced. This scheme may use up to four layers for UL.

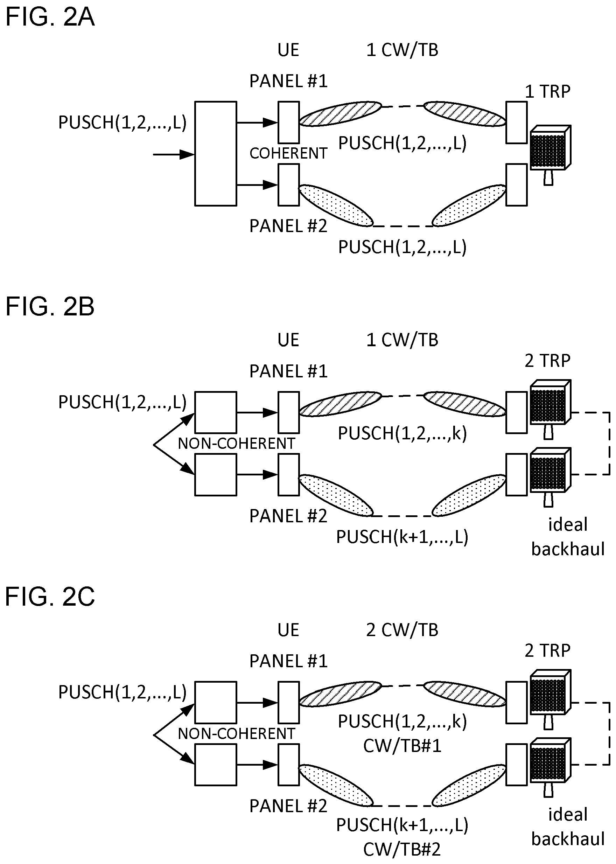

In an example in FIG. 2A, the UE maps one codeword (CW) or one transport block (TB) to L layers (PUSCH (1, 2, ..., L)) to transmit L layers from each of the two panels. Panel #1 and panel #2 are coherent with each other. Transmission scheme 1 can obtain a gain by diversity. A total number of layers in the two panels is 2L. When a maximum value of the total number of layers is 4, a maximum value of the number of layers in one panel is 2.

<Transmission Scheme 2: Non-coherent Multi-panel UL Transmission with One Codeword (CW) or Transport Block (TB)>

A plurality of panels may not be synchronized with each other. Different layers are mapped to different panels and one CW or TB for PUSCHs from the plurality of panels. Layers corresponding to one CW or TB may be mapped to the plurality of panels. This transmission scheme may use up to four layers or up to eight layers for UL. When up to eight layers are supported, this transmission scheme may support one CW or TB using up to eight layers.

In an example in FIG. 2B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Transmission scheme 2 can obtain a gain by multiplexing and diversity. A total number of layers in the two panels is L.

<Transmission Scheme 3: Non-coherent Multi-panel UL Transmission with Two CWs or TBs>

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In an example in FIG. 2C, the UE maps CW #1 or TB #1 and CW #2 or TB #2 of the 2 CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Transmission scheme 3 can obtain a gain by multiplexing and diversity. A total number of layers in the two panels is L.

In each of the above-described transmission schemes, the base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

(PTRS)

Rel-15 NR supports a phase tracking reference signal (PTRS). A base station may transmit a PTRS on downlink. The base station may map the PTRS continuously or discontinuously in a time direction and transmit the mapped PTRS, on a given number of (for example, one) subcarriers.

For example, the UE may receive the PTRS in at least part of a period (slot, symbol, or the like) in which a downlink shared channel (Physical Downlink Shared Channel (PDSCH)) is scheduled (in other words, a period for receiving the PDSCH). The PTRS transmitted by the base station may be referred to as a DL PTRS.

The UE may transmit a PTRS on uplink. The UE may map the PTRS continuously or discontinuously in a time direction and transmit the mapped PTRS, on a given number of (for example, one) subcarriers.

For example, the UE may transmit the PTRS in at least part of a period (slot, symbol, or the like) in which an uplink shared channel (Physical Uplink Shared Channel (PUSCH)) is scheduled (in other words, a period for receiving the PUSCH). The PTRS transmitted by the UE may be referred to as a UL PTRS.

The base station or the UE may determine, based on the received PTRS, a phase noise and compensate a phase error of a received signal (for example, a PUSCH, a PDSCH).

The UE may be configured with PTRS configuration information (PTRS-DownlinkConfig for DL, PTRS-Uplink-Config for UL) by using higher layer signaling. For example, the PTRS configuration information may be included in configuration information for a demodulation reference signal (DMRS) for the PDSCH or the PUSCH (DMRS-DownlinkConfig, DMRS-UplinkConfig).

<PTRS and DMRS>

In NR (for example, Rel. 15), a DMRS port associated with a PTRS port is assumed to satisfy a relationship of QCL in relation to QCL types A and D. In other words, when a given PTRS port is associated with a given DMRS port, the PTRS port and the DMRS port may be assumed to be in relationships of QCL types A and D with each other.

Rel-16 NR supports a case that an association between a PTRS port and a DMRS port (for example, PTRS-DMRS association) is indicated by a given field of DCI. The given field may be referred to as a field for associating a PTRS with a DMRS, or a PTRS-DMRS association field.

<Transmission Power Ratio between PTRS and PUSCH>

When the UE is scheduled with $Q_P=\{1, 2\}$ PTRS ports on UL, and the number of scheduled layers is $n_{layer}^{PUSCH}$, the UE may follow the following procedure.

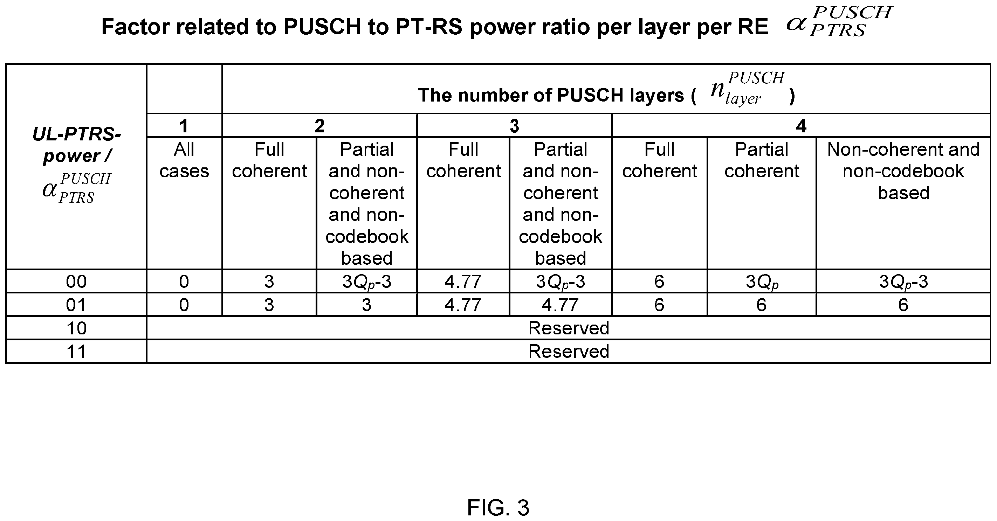

- If the UE is configured with a higher layer parameter "ptrs-Power (UL-PTRS-power)," a PUSCH to PTRS power ratio per layer per RE $\rho_{PTRS}^{PUSCH}$ is given by $\rho_{PTPS}^{PUSCH} = -\alpha_{PTRS}^{PUSCH}$ [dB]. Here, $\alpha_{PTRS}^{PUSCH}$ is indicated by a table (association) of FIG. 3 in accordance with the higher layer parameter "ptrs-Power," and a PTRS scaling factor $\beta_{PTRS}$ is given by $\beta_{PTRS} = 10^{\wedge}(-\rho_{PTRS}^{PUSCH}/20)$ and a precoding information and number of layers field 'Precoding Information and Number of Layers' in DCI.
- The UE assumes that if "ptrs-Power" in PTRS-Config is not configured or in a case of a non-codebook based PUSCH, "ptrs-Power" in PTRS-Config is set to state '00' in the table of FIG. 3.

In full coherent, the number of PTRS ports is always 1.

One PTRS port is precoded by (the number of ports * the number of layers = 1) precoding matrix. A PUSCH with X layers is precoded by (the number of ports * the number of layers) precoding matrices. Accordingly, a PTRS to PUSCH transmission power ratio per layer per RE is $10\log_{10}$(the number of PUSCH layers) [dB].

In non-coherent, the number of PTRS ports is 1 or 2.

When UL-PTRS-power ="00," the PTRS port borrows power from different REs of the same layer (REs used for PTRSs on different ports). If the number of PTRS ports is 1, no power boosting is performed. Instead, if the number of PTRS ports is 2, an RE for a PTRS on another port is muted and power for the RE is borrowed.

When UL-PTRS-power = "01," the PTRS ports borrow power from the same RE of different layers. Accordingly, the PTRS to PUSCH transmission power ratio per layer per RE being $10\log_{10}$(the number of PUSCH layers) [dB] is always supported.

In partial coherent, the number of PTRS ports is 1 or 2.

When UL-PTRS-power = "00," a combination of two power borrowing (utilization) schemes is used. The two schemes are a scheme for borrowing power from different REs of the same layer (REs used for PTRSs on different ports) and a scheme for borrowing power from the same RE of different layers (outside a coherent group). For a four-layer PUSCH, two coherent groups are considered. If the number of PTRS ports is 1, the PTRS port borrows power from the same RE on different layers in the coherent group. In other words, the PTRS to PUSCH transmission power ratio per layer per RE is $10\log_{10}$(the number of PUSCH layers in the coherent group) [dB]. Instead, if the number of PTRS ports is 2, power is borrowed from the same RE on different layers in the coherent group, and power is borrowed from different REs of the same layer, the REs being used for PTRSs on another layer. In other words, the PTRS to PUSCH transmission power ratio per layer per RE is $10\log_{10}\{$(the number of PUSCH layers in the coherent group) * (the number of PTRS ports)$\}$ [dB].

When UL-PTRS-power = "01," the PTRS ports borrow power from the same RE of different layers. Accordingly, the PTRS to PUSCH transmission power ratio per layer per RE being $10\log_{10}$(the number of PUSCH layers) [dB] is always supported.

When use of a PTRS is indicated in a resource block used for the PUSCH, the UE transmits the PTRS. The PTRS for the PUSCH is mapped to an RE in accordance with the following equation.

[Math. 1]

$$\begin{bmatrix} a_{k,l}^{(p_o,\mu)} \\ \vdots \\ a_{k,l}^{(p_{\rho-1},\mu)} \end{bmatrix} = \beta_{\text{PT-RS}} W \begin{bmatrix} r^{(\tilde{p}_0)}(2n + k') \\ \vdots \\ r^{(\tilde{p}_{v-1})}(2n + k') \end{bmatrix} \quad (1)$$

k in Equation (1) is defined as the following equation.
[Math. 2]

$$k = \begin{cases} 4n + 2k' + \Delta & \text{configuration type 1} \\ 6n + k' + \Delta & \text{configuration type 2} \end{cases} \quad (2)$$

Assume that all of the following conditions are satisfied.

- l is in an OFDM symbol allocated to PUSCH transmission.
- A resource element is not used for a DM-RS.
- k' and $\Delta$ correspond to antenna ports $pbar_0$, ..., $pbar_{v-1}$ (bar represents an overline on p).

A configuration type is indicated by a higher layer parameter "dmrs-Type" in DMRS-UplinkConfig. $\beta_{PTRS}$ ($\beta_{PT-RS}$) is an amplitude scaling factor for allowing transmission power to be matched.

Incidentally, in future radio communication systems (for example, Rel-18 NR), it is unclear as to how to determine a parameter ($\alpha_{PTRS}^{PUSCH}$) for determining a transmission power ratio between a PTRS and a PUSCH, when a simultaneous transmission (STxMP) PUSCH using multi-panel is supported. Unless this is made clear, transmission (transmission power) of UL transmission (at least one of the PTRS and the PUSCH) cannot be appropriately controlled.

In view of this, the inventors of the present invention studied a method for appropriately controlling UL transmission even when simultaneous transmission using multi-panel is supported, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, STxMP, SiMPUL, simultaneous transmission using multi-panel, multi-panel simultaneous transmission, and multi-panel simultaneous UL transmission may be interchangeably interpreted. STxMP may mean that a plurality of joint/UL TCI states, spatial relations, and beams are indicated/configured for one PUSCH/-PUCCH/SRS. In the present disclosure, to be supported and to be configured/indicated may be interchangeably interpreted. In the present disclosure, transmission power and output power may be interchangeably interpreted. In the present disclosure, determination by a UE and configuration/indication by a network (base station/gNB) may be interchangeably interpreted.

In the present disclosure, a panel, a panel ID, a UE capability value index, a UE capability value set, a TCI state, an SRI, an SRS resource set, an SRS resource set ID, a CORESET pool index (CORESETPoolIndex), a layer group, and an antenna port group may be interchangeably interpreted.

A first/second panel, a first/second SRI, a first/second TCI state, a TCI state with a lower/higher ID, a first/second SRI field, a first/second TCI state field, a first/second SRS resource set (SRS resource set with a lower/higher ID), a lower/higher panel ID, and a lower/higher TRP ID may be interchangeably interpreted. The first panel may be a panel corresponding to a first layer/first DMRS port/first CDM group, and the second panel may indicate another panel.

(Radio Communication Method)

A PUSCH in the following embodiments may be, for example, a space division multiplexing (SDM) PUSCH. This allows the UE to enhance throughput by transmitting PUSCHs with separate MIMO layers in respective UL panels/-beams/TCI states. Alternatively, the PUSCH in the following embodiments may be single frequency network (SFN)-PUSCH repetitions, SDM PUSCH repetitions, frequency division multiplexing (FDM) PUSCH repetitions, or the like. For example, when the PUSCH is applied to an SFN-PUSCH, transmitting the same PUSCHs in respective UL panels/beams/TCI states can enhance reliability.

Note that the following examples will describe examples of two panels, but may also be similarly applied for three or more panels. For example, when the number of panels is n, first/second panels may be replaced with first/second/.../n-th panels.

<First Embodiment>

As described above, a PUSCH to PTRS power ratio per layer per RE is given as $\rho_{PTRS}^{PUSCH} = -\alpha_{PTRS}^{PUSCH}$ [dB]. In a space division multiplexing (SDM) scheme using STxMP, when one PTRS port is used, the parameter $\alpha_{PTRS}^{PUSCH}$ may follow, based on the table of FIG. 3, a higher layer parameter "ptrs-Power," the number of PUSCH layers, and a coherent type, and may be further determined in accordance with one of the following options. ptrs-Power is a power boosting factor per PTRS port for a UL PTRS.

A UE may determine a first parameter ($\alpha_{PTRS}^{PUSCH}$) related to power of a phase tracking reference signal (PTRS) and corresponding to at least one of two panels, and may determine, based on the first parameter, a transmission power ratio ($\rho_{PTPS}^{PUSCH}$) between the PTRS and a PUSCH. The UE may control transmission of the PTRS and the PUSCH by using the transmission power ratio. The UE may transmit the PTRS from one PTRS port corresponding to the two panels. $\alpha_{PTRS}^{PUSCH}$ may be determined by a base station in a similar manner, and this determined $\alpha_{PTRS}^{PUSCH}$ may be received and applied by the UE.

[Option 1]

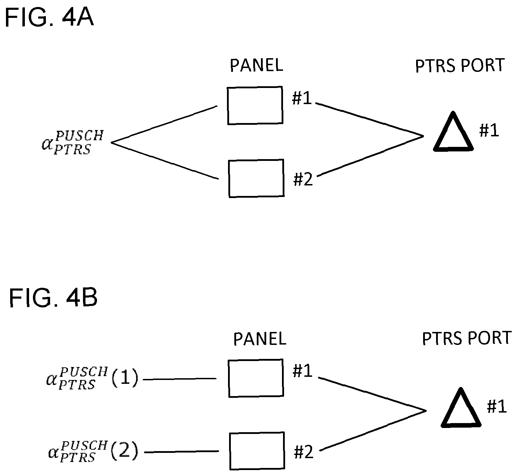

$\alpha_{PTRS}^{PUSCH}$ may be determined based on a parameter (for example, ptrs-Power) common to the two panels (FIG. 4A). The UE may apply this $\alpha_{PTRS}^{PUSCH}$ to the PTRS port. A higher layer parameter "ptrs-Power" is common to the two panels. The number of PUSCH layers is the number of layers over the two panels. The coherent type is a coherent type of an antenna port over the two panels.

[Option 2]

$\alpha_{PTRS}^{PUSCH}$ may be determined for each panel, based on a separate parameter (for example, ptrs-Power) for each of the two panels (FIG. 4B). A higher layer parameter "ptrs-Power" is configured for each panel (or in common for the two panels). The number of PUSCH layers is the number of layers for each panel (or common to the two panels). The coherent type is a coherent type of an antenna port for each panel (or common to the two panels). One of Options 2.1 to 2.4 below may be applied to a relationship between the PTRS port and $\alpha_{PTRS}^{PUSCH}$.

[Option 2.1]

For the PTRS port, $\alpha_{PTRS}^{PUSCH}$ determined for a first/second panel is applied.

[Option 2.2]

Whether $\alpha_{PTRS}^{PUSCH}$ determined for the first/second panel is applied for the PTRS port may be semi-statically or dynamically indicated for the UE via RRC/MAC CE/DCI.

[Option 2.3]

For the PTRS port, $\alpha_{PTRS}^{PUSCH}$ determined for a panel with a smaller (smallest)/larger (largest) number of layers is applied.

[Option 2.4]

For the PTRS port, a larger (largest) value/smaller (smallest) value of $\alpha_{PTRS}^{PUSCH}$ for panels is applied.
According to the present embodiment, a parameter $\alpha_{PTRS}^{PUSCH}$ can be appropriately determined in a case where a PTRS is transmitted by using a plurality of panels and one PTRS port.

<Second Embodiment>

A PUSCH to PTRS power ratio per layer per RE is given as $\rho_{PTRS}^{PUSCH} = -\alpha_{PTRS}^{PUSCH}$ [dB]. In an STxMP SDM scheme, when two PTRS ports are used, the parameter $\alpha_{PTRS}^{PUSCH}$ may be determined based on the table of FIG. 3, as with Rel. 17, may follow a higher layer parameter "ptrs-Power," the number of PUSCH layers, and a coherent type, and may be further determined in accordance with one of the following options. Note that, in the following example, an example in which two PTRS ports are present will be described, but three or more PTRS ports may be present.
A UE may determine a first parameter ($\alpha_{PTRS}^{PUSCH}$) related to power of a phase tracking reference signal (PTRS) and corresponding to at least one of two panels, and may determine, based on the first parameter, a transmission power ratio ($\rho_{PTPS}^{PUSCH}$) between the PTRS and a PUSCH. The UE may control transmission of the PTRS and the PUSCH by using the parameter. The UE may transmit the PTRS from two PTRS ports corresponding to the two respective panels. $\alpha_{PTRS}^{PUSCH}$ may be determined by a base station in a similar manner, and this determined $\alpha_{PTRS}^{PUSCH}$ may be received and applied by the UE.

[Option 1]

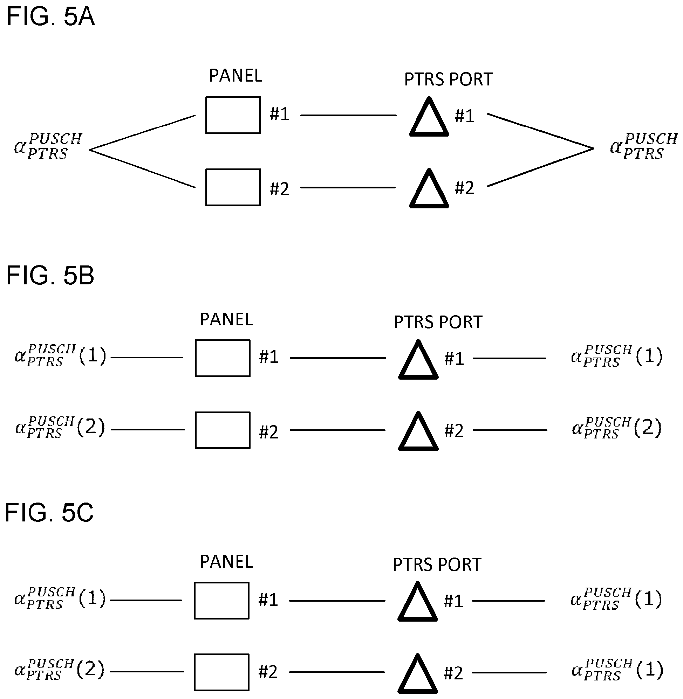

$\alpha_{PTRS}^{PUSCH}$ is determined based on a parameter (for example, ptrs-Power) common to the two panels, and the UE applies this $\alpha_{PTRS}^{PUSCH}$ to all the PTRS ports associated with all the panels (FIG. 5A). A higher layer parameter "ptrs-Power" is common to the two panels. The number of PUSCH layers is the number of layers over the two panels. The coherent type is a coherent type of an antenna port over the two panels.

[Option 2]

$\alpha_{PTRS}^{PUSCH}$ is determined for each panel, based on a separate parameter (for example, ptrs-Power) for each of the two panels, and is applied to a PTRS port associated with the panel (FIG. 5B). A higher layer parameter "ptrs-Power" is configured for each panel (or in common for the two panels). The number of PUSCH layers is the number of layers for each panel (or common to the two panels). The coherent type is a coherent type of an antenna port for each panel (or common to the two panels).

[Option 3]

$\alpha_{PTRS}^{PUSCH}$ is determined for each panel, based on a separate parameter for each panel. Note, however, that $\alpha_{PTRS}^{PUSCH}$ for one panel is applied to all the PTRS ports associated with all the panels (FIG. 5C). A higher layer parameter "ptrs-Power" is configured for each panel (or in common for the two panels). The number of PUSCH layers corresponds to the number of layers for each panel (or common to the two panels). The coherent type corresponds to a coherent type of an antenna port for each panel (or common to the two panels). One of Options 3.1 to 3.4 below may be applied to a relationship between the PTRS port and

$\alpha_{PTRS}^{PUSCH}$.

[Option 3.1]

For all the PTRS ports associated with all the panels, $\alpha_{PTRS}^{PUSCH}$ determined for a first/second panel is applied.

[Option 3.2]

Whether $\alpha_{PTRS}^{PUSCH}$ determined for the first/second panel is applied for all the PTRS ports associated with all the panels may be semi-statically or dynamically indicated for the UE via RRC/MAC CE/DCI.

[Option 3.3]

For all the PTRS ports associated with all the panels, $\alpha_{PTRS}^{PUSCH}$ determined for a panel with a smaller (smallest) /larger (largest) number of layers is applied.

[Option 3.4]

For all the PTRS ports associated with all the panels, a larger (largest) value/smaller (smallest) value of $\alpha_{PTRS}^{PUSCH}$ for a plurality of panels is applied.
According to the present embodiment, a parameter $\alpha_{PTRS}^{PUSCH}$ can be appropriately determined in a case where a PTRS is transmitted by using a plurality of panels and two or more PTRS ports.

<Transmission Power Ratio between DM-RS and PUSCH>

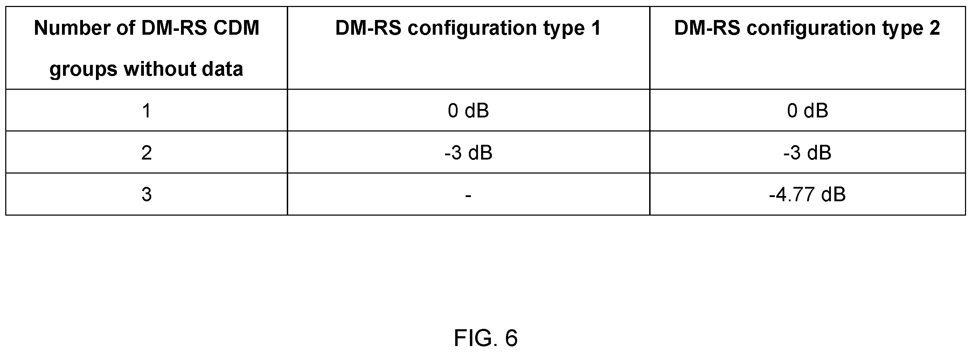

In Rel. 17, in a case of an uplink DM-RS with a PUSCH, the UE is given the ratio of a PUSCH energy per resource element (EPRE) to a DM-RS EPRE ($\beta_{DMRS}$ [dB]), depending on the number of DM-RS CDM groups without data, for each DM-RS configuration type (FIG. 6). The DM-RS scaling factor $\beta_{PUSCH}^{DMRS}$ is given as $\beta_{PUSCH}^{DMRS} = 10\wedge(-\beta_{DMRS}/20)$.
Intermediate quantity $\alpha\widetilde{}_{k,l}^{(\tilde{p}j,\mu)}$ is multiplied by an amplitude scaling factor $\beta_{PUSCH}^{DMRS}$ so that transmission power is matched, to thereby be mapped to physical resources, as described in the following equation. k and l represent a subcarrier and a symbol for a resource element, respectively. p represents an antenna port.
[Math. 3]

$$\begin{bmatrix} a_{k,l}^{(p_0,\mu)} \\ \vdots \\ a_{k,l}^{(p_{\rho-1},\mu)} \end{bmatrix} = \beta_{PUSCH}^{DMRS} W \begin{bmatrix} \tilde{a}_{k,l}^{(\tilde{p}_0,\mu)} \\ \vdots \\ \tilde{a}_{k,l}^{(\tilde{p}_{\upsilon-1},\mu)} \end{bmatrix} \qquad (3)$$

However, in the STxMP SDM scheme, it is unclear as to how to determine the parameter ($\beta_{DMRS}$) for determining a transmission power ratio between the DMRS and the PUSCH. Thus, in the following embodiment, a method for determining this parameter will be specifically described.

<Third Embodiment>

As described above, a DM-RS scaling factor is given as $\beta_{PUSCH}^{DMRS} = 10\wedge(-\beta_{DMRS}/20)$. In the STxMP SDM scheme, the parameter $\beta_{DMRS}$ may follow, based on FIG. 6, the number of DM-RS CDM groups without data and a DMRS configuration type, and may be further determined in accordance with the following options.
A UE may determine a second parameter ($\beta_{DMRS}$) related to power of a demodulation reference signal (DMRS) and corresponding to at least one of two panels, and may determine, based on the second parameter, a transmission power ratio ($\beta_{PUSCH}^{DMRS}$) between the DMRS and a PUSCH. The UE may control transmission of the DMRS and the PUSCH by using the transmission power ratio parameter. The UE may transmit the DMRS from one or two or more DMRS ports corresponding to the two panels. $\beta_{DMRS}$ may be determined by a base station in a similar manner, and this determined $\beta_{DMRS}$ may be received and applied by the UE.

Note that, in the present embodiment, an example in which two DMRS ports are present will be described, but one DMRS port may be present. In other words, the example obtained by replacing the PTRS and $\alpha_{PTRS}^{PUSCH}$ in the first embodiment with a DMRS and $\beta_{DMRS}$, respectively, may be applied.

[Option 1]

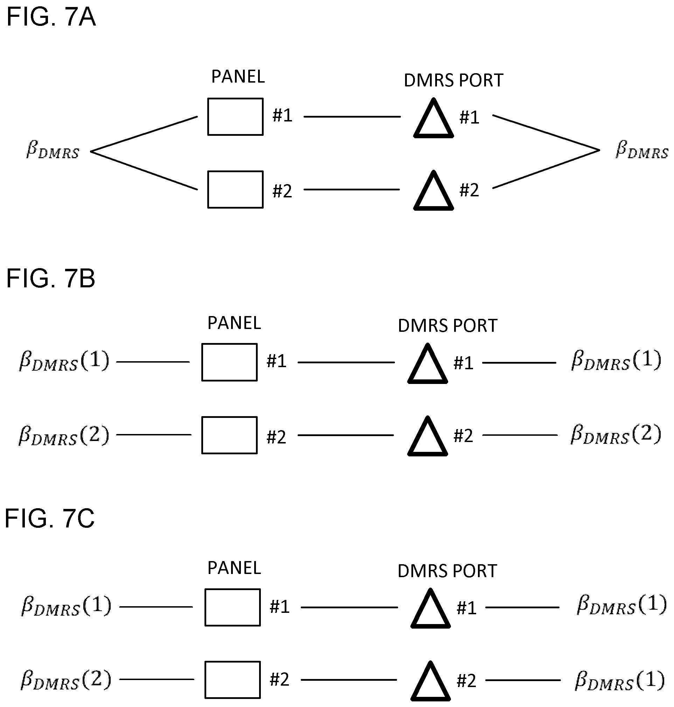

$\beta_{DMRS}$ is determined based on a parameter common to the two panels, and the UE applies this $\beta_{DMRS}$ to all the DMRS ports associated with all the panels (FIG. 7A). The number of DMRS CDM groups without data may be common to the two panels. The DMRS configuration type may be common to the two panels.

[Option 2]

$\beta_{DMRS}$ is determined for each panel, based on a separate parameter for each panel, and is applied to a DMRS port associated with the panel (FIG. 7B). The number of DMRS CDM groups without data may be indicated for each panel. The DMRS configuration type may be configured for each panel. Alternatively, at least one of the number of DMRS CDM groups without data and the DMRS configuration type may be common to the two panels.

[Option 3]

$\beta_{DMRS}$ may be determined for each panel, based on a parameter for each panel. Note, however, that $\beta_{DMRS}$ for one panel is applied to all the DMRS ports associated with all the panels (FIG. 7C). The number of DMRS CDM groups without data may be indicated for each panel. The DMRS configuration type may be configured for each panel. Alternatively, at least one of the number of DMRS CDM groups without data and the DMRS configuration type may be common to the two panels. One of Options 3.1 to 3.4 below may be applied to a relationship between the DMRS ports and $\beta_{DMRS}$.

[Option 3.1]

For all the DMRS ports associated with all the panels, $\beta_{DMRS}$ determined for a first/second panel is applied.

[Option 3.2]

Whether $\beta_{DMRS}$ determined for the first/second panel is applied for all the DMRS ports associated with all the panels may be semi-statically or dynamically indicated for the UE via RRC/MAC CE/DCI.

[Option 3.3]

For all the DMRS ports associated with all the panels, $\beta_{DMRS}$ determined for a panel with a smaller (smallest)/larger (largest) number of layers/the number of DMRS ports/the number of DMRS CDM groups without data is applied.

[Option 3.4]

For all the DMRS ports associated with all the panels, a larger (largest) value/smaller (smallest) value of $\beta_{DMRS}$ for a plurality of panels is applied.

According to the present embodiment, a parameter $\beta_{DMRS}$ can be appropriately determined in a case where a DMRS is transmitted by using a plurality of panels and one or two or more DMRS ports.

<Supplement>

{Notification of Information to UE}

Any notification of information (from a network (NW) (for example, a base station (BS))) to a UE (in other words, any reception, in the UE, of information from the BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by a MAC CE, the MAC CE may be identified by a new logical channel ID (LCID) being included in a MAC sub-header, the new logical channel ID being not defined in an existing specification.

In a case where the notification described above is performed by DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to the UE in the above-described embodiments may be performed periodically, semi-persistently, or aperiodically.

{Notification of Information from UE}

Any notification of information from a UE (to a NW) (in other words, any transmission/reporting, in the UE, of information to the BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by a MAC CE, the MAC CE may be identified by a new LCID being included in a MAC sub-header, the new LCID being not defined in an existing specification.

In a case where the notification described above is performed by UCI, the notification described above may be transmitted by using a PUCCH or a PUSCH.

Any notification of information from the UE in the above-described embodiments may be performed periodically, semi-persistently, or aperiodically.

{Application of Respective Embodiments}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to the UE that has reported a specific UE capability or that supports the specific UE capability.

The specific UE capability may indicate at least one of the following:

- supporting specific processing/operation/control/information for at least one of the above-described embodiments;
- supporting an SDM scheme; and
- supporting one or two or more PTRS ports in an SDM scheme.

The specific UE capabilities described above may be a capability applied across all the frequencies (commonly regardless of frequency), a capability per frequency (for example, one or combinations of a cell, a band, a band combination, a BWP, a component carrier, and the like), a capability per frequency range (for example, Frequency Range 1 (FR1), FR2, FR3, FR4, FR5, FR2-1, FR2-2), a capability per subcarrier spacing (SCS), or a capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. For example, the specific information may be any RRC parameter for a specific release (for example, Rel. 18/19), or the like.

When not supporting at least one of the specific UE capabilities or not configured with the specific information, the UE may apply operation of Rel. 15/16, for example.

(Supplementary Note)

Regarding one embodiment of the present disclosure, the following supplementary notes of the invention will be given.

{Supplementary Note 1}

A terminal including:

a control section that determines a first parameter related to power of a phase tracking reference signal (PTRS) and corresponding to at least one of two panels and that determines, based on the first parameter, a transmission power ratio between the PTRS and a physical uplink shared channel (PUSCH); and
a transmitting section that transmits the PTRS and the PUSCH.

{Supplementary Note 2}

The terminal according to supplementary note 1, wherein

the control section determines the first parameter, based on a parameter common to the two panels or a separate parameter for each of the two panels, and
the transmitting section transmits the PTRS from one PTRS port corresponding to the two panels.

{Supplementary Note 3}

The terminal according to supplementary note 1, wherein

the control section determines the first parameter, based on a parameter common to the two panels or a separate parameter for each of the two panels, and
the transmitting section transmits the PTRS from two PTRS ports corresponding to the two respective panels.

{Supplementary Note 4}

The terminal according to any one of supplementary notes 1 to 3, wherein

the control section determines a second parameter related to power of a demodulation reference signal (DMRS) and corresponding to at least one of the two panels, and determines, based on the second parameter, a transmission power ratio between the DMRS and the PUSCH, and
the transmitting section transmits the DMRS.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

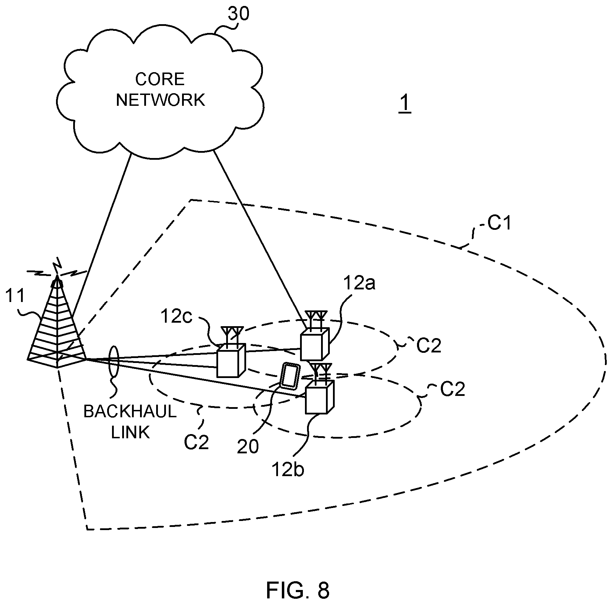

FIG. 8 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

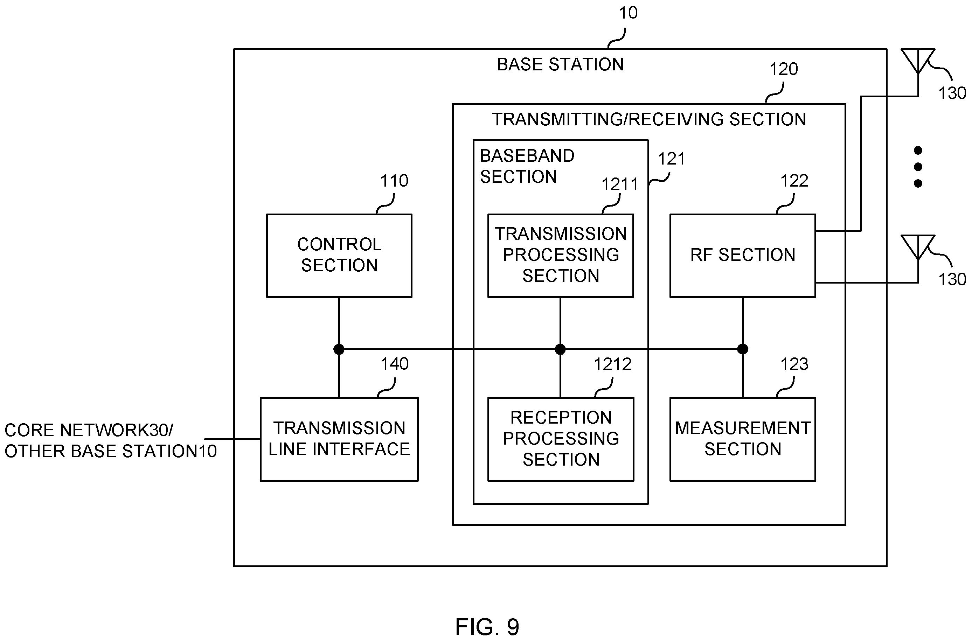

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine a first parameter related to power of a phase tracking reference signal (PTRS) and corresponding to at least one of two panels, and may determine, based on the first parameter, a transmission power ratio between the PTRS and a physical uplink shared channel (PUSCH).

Note that the transmitting/receiving section 120 may receive the PTRS and the PUSCH.

(User Terminal)

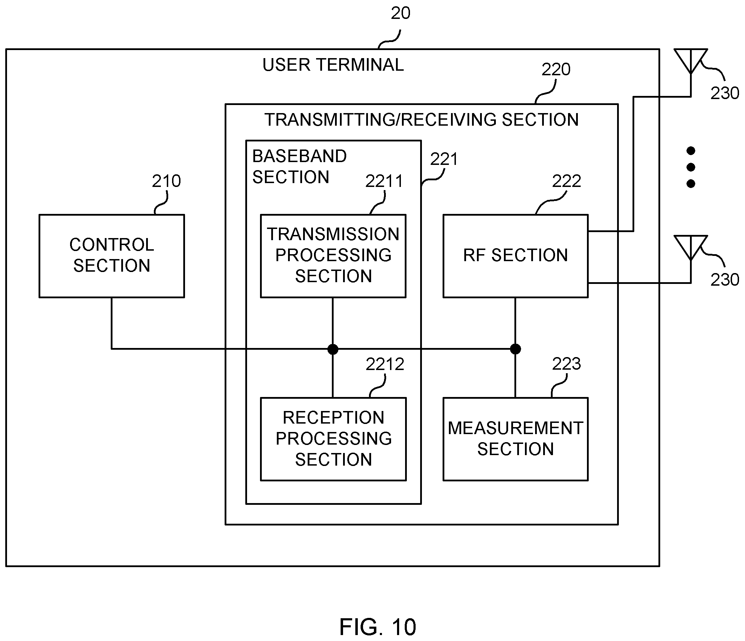

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine a first parameter related to power of a phase tracking reference signal (PTRS) and corresponding to at least one of two panels, and may determine, based on the first parameter, a transmission power ratio between the PTRS and a physical uplink shared channel (PUSCH).

Note that the transmitting/receiving section 220 may transmit the PTRS and the PUSCH.

The control section 210 may determine the first parameter, based on a parameter common to the two panels or a separate parameter for each of the two panels. The transmitting/receiving section 220 may transmit the PTRS from one PTRS port corresponding to the two panels.

The control section 210 may determine the first parameter, based on a parameter common to the two panels or a separate parameter for each of the two panels. The transmitting/receiving section 220 may transmit the PTRS from two PTRS ports corresponding to the two respective panels.

The control section 210 may determine a second parameter related to power of a demodulation reference signal (DMRS) and corresponding to at least one of the two panels, and may determine, based on the second parameter, a transmission power ratio between the DMRS and the PUSCH. The transmitting/receiving section 220 may transmit the DMRS.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

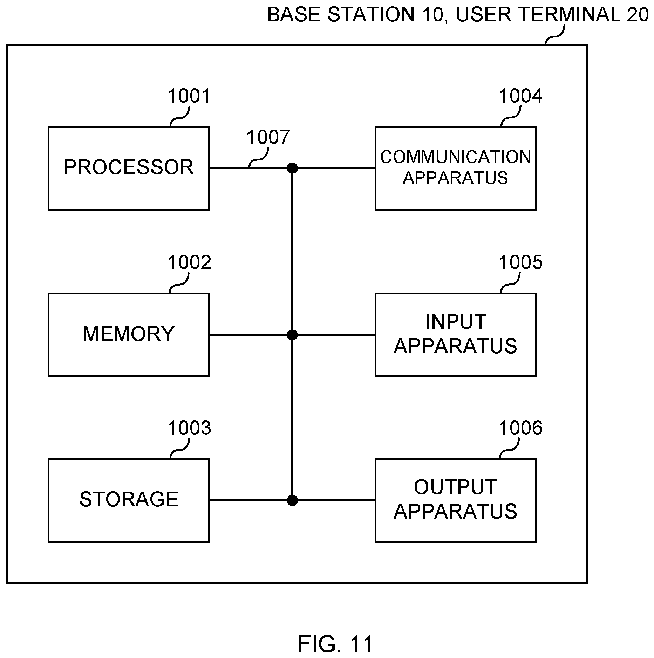

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

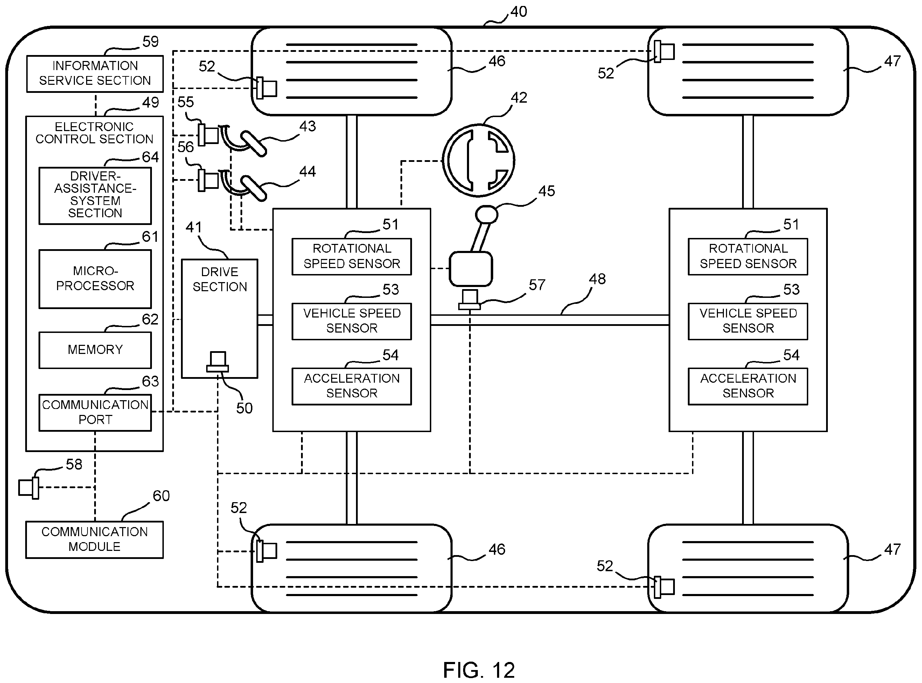

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

**Claims**

1. A terminal comprising:

   a control section that determines a first parameter related to power of a phase tracking reference signal (PTRS) and corresponding to at least one of two panels and that determines, based on the first parameter, a transmission power ratio between the PTRS and a physical uplink shared channel (PUSCH); and
   a transmitting section that transmits the PTRS and the PUSCH.

2. The terminal according to claim 1, wherein

   the control section determines the first parameter, based on a parameter common to the two panels or a separate parameter for each of the two panels, and
   the transmitting section transmits the PTRS from one PTRS port corresponding to the two panels.

3. The terminal according to claim 1, wherein

   the control section determines the first parameter, based on a parameter common to the two panels or a separate parameter for each of the two panels, and
   the transmitting section transmits the PTRS from two PTRS ports corresponding to the two respective panels.

4. The terminal according to claim 1, wherein

   the control section determines a second parameter related to power of a demodulation reference signal (DMRS) and corresponding to at least one of the two panels, and determines, based on the second parameter, a transmission power ratio between the DMRS and the PUSCH, and
   the transmitting section transmits the DMRS.

5. A radio communication method for a terminal, the radio communication method comprising:

determining a first parameter related to power of a phase tracking reference signal (PTRS) and corresponding to at least one of two panels and determining, based on the first parameter, a transmission power ratio between the PTRS and a physical uplink shared channel (PUSCH); and

transmitting the PTRS and the PUSCH.

6. A base station comprising:

a control section that determines a first parameter related to power of a phase tracking reference signal (PTRS) and corresponding to at least one of two panels and that determines, based on the first parameter, a transmission power ratio between the PTRS and a physical uplink shared channel (PUSCH); and

a receiving section that receives the PTRS and the PUSCH.

FIG. 1A

UE
PANEL #1

PUSCH

1 TRP

PANEL #2

FIG. 1B

UE
PANEL #1

PUSCH

2 TRP

TRP#1

ideal
backhaul

PANEL #2

TRP#2

## FIG. 2A

UE      1 CW/TB

PANEL #1

PUSCH(1,2,...,L)

COHERENT

1 TRP

PUSCH(1,2,...,L)

PANEL #2

PUSCH(1,2,...,L)

## FIG. 2B

UE      1 CW/TB

PANEL #1

PUSCH(1,2,...,L)

NON-COHERENT

2 TRP

PUSCH(1,2,...,k)

PANEL #2

PUSCH(k+1,...,L)

ideal backhaul

## FIG. 2C

UE      2 CW/TB

PANEL #1

PUSCH(1,2,...,L)

NON-COHERENT

2 TRP

PUSCH(1,2,...,k)
CW/TB#1

PANEL #2

PUSCH(k+1,...,L)
CW/TB#2

ideal backhaul

**Factor related to PUSCH to PT-RS power ratio per layer per RE** $\alpha_{PTRS}^{PUSCH}$

| UL-PTRS-power / $\alpha_{PTRS}^{PUSCH}$ | The number of PUSCH layers ( $n_{layer}^{PUSCH}$ ) | | | | | | | |
|---|---|---|---|---|---|---|---|---|
| | 1 | 2 | | 3 | | 4 | | |
| | All cases | Full coherent | Partial and non-coherent and non-codebook based | Full coherent | Partial and non-coherent and non-codebook based | Full coherent | Partial coherent | Non-coherent and non-codebook based |
| 00 | 0 | 3 | $3Q_p-3$ | 4.77 | $3Q_p-3$ | 6 | $3Q_p$ | $3Q_p-3$ |
| 01 | 0 | 3 | 3 | 4.77 | 4.77 | 6 | 6 | 6 |
| 10 | Reserved | | | | | | | |
| 11 | Reserved | | | | | | | |

FIG. 3

EP 4 598 151 A1

FIG. 4A

PANEL       PTRS PORT

$\alpha_{PTRS}^{PUSCH}$

#1

#2

#1

FIG. 4B

PANEL       PTRS PORT

$\alpha_{PTRS}^{PUSCH}(1)$

$\alpha_{PTRS}^{PUSCH}(2)$

#1

#2

#1

FIG. 5A

PANEL

PTRS PORT

$\alpha_{PTRS}^{PUSCH}$

#1

#1

$\alpha_{PTRS}^{PUSCH}$

#2

#2

FIG. 5B

PANEL

PTRS PORT

$\alpha_{PTRS}^{PUSCH}(1)$ — #1 — #1 — $\alpha_{PTRS}^{PUSCH}(1)$

$\alpha_{PTRS}^{PUSCH}(2)$ — #2 — #2 — $\alpha_{PTRS}^{PUSCH}(2)$

FIG. 5C

PANEL

PTRS PORT

$\alpha_{PTRS}^{PUSCH}(1)$ — #1 — #1 — $\alpha_{PTRS}^{PUSCH}(1)$

$\alpha_{PTRS}^{PUSCH}(2)$ — #2 — #2 — $\alpha_{PTRS}^{PUSCH}(1)$

| Number of DM-RS CDM groups without data | DM-RS configuration type 1 | DM-RS configuration type 2 |
|---|---|---|
| 1 | 0 dB | 0 dB |
| 2 | -3 dB | -3 dB |
| 3 | - | -4.77 dB |

FIG. 6

## FIG. 7A

PANEL

DMRS PORT

$\beta_{DMRS}$

#1 ⬜ — △ #1

#2 ⬜ — △ #2

$\beta_{DMRS}$

## FIG. 7B

PANEL

DMRS PORT

$\beta_{DMRS}(1)$ — ⬜ #1 — △ #1 — $\beta_{DMRS}(1)$

$\beta_{DMRS}(2)$ — ⬜ #2 — △ #2 — $\beta_{DMRS}(2)$

## FIG. 7C

PANEL

DMRS PORT

$\beta_{DMRS}(1)$ — ⬜ #1 — △ #1 — $\beta_{DMRS}(1)$

$\beta_{DMRS}(2)$ — ⬜ #2 — △ #2 — $\beta_{DMRS}(1)$

FIG. 8

FIG. 9

EP 4 598 151 A1

FIG. 10

EP 4 598 151 A1

BASE STATION 10, USER TERMINAL 20

FIG. 11

FIG. 12

## INTERNATIONAL SEARCH REPORT

| | International application No. |
|---|---|
| | **PCT/JP2022/036686** |

**A.    CLASSIFICATION OF SUBJECT MATTER**

*H04W 52/16*(2009.01)i; *H04W 52/34*(2009.01)i
FI:    H04W52/16; H04W52/34

According to International Patent Classification (IPC) or to both national classification and IPC

**B.    FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | VIVO. Discussion on UL precoding indication for multi-panel transmission [online]. 3GPP TSG RAN WG1 #110 R1-2206029. 12 August 2022<br>section 5 | 1-6 |
| Y | 3rd Generation Partnership Project. Technical Specification Group Radio Access Network; NR; Physical layer procedures for data (Release 17). 3GPP TS 38.214 V 17.3.0 (September 2022). 21 September 2022, pages 193-198<br>sections 6.2.2, 6.2.3 | 1-6 |

☐ Further documents are listed in the continuation of Box C.          ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010